# EUROPEAN PATENT APPLICATION

(11) **EP 4 699 791 A1**
(43) Date of publication of application: **25.02.2026**
(21) Application number: 25199358.0
(22) Date of filing: 01.09.2025
(51) Int. Cl.: B29C 65/20, B29C 65/78, E06B 3/96

(54) **WELDING ASSEMBLY FOR JOINING PLASTIC PROFILE ELEMENTS, ESPECIALLY WINDOW OR DOOR FRAMES, MACHINE FOR WELDING PROFILE ELEMENTS AND METHOD FOR WELDING PROFILE ELEMENTS.**

(71) Applicant: Awgtech Spolka z Ograniczona Odpowiedzialnoscia, 48-303 Nysa (PL)
(72) Inventor: Wojtasik, Kamil, Nysa (PL)
(74) Representative: AOMB Polska Sp. z.o.o.

(57) **Abstract**

The invention relates to a welding assembly comprising: a heating module configured to heat the end faces of the profile elements to plasticize the material in their area, equipped with a heating plate (8) and heating plate moving means (6, 7); cooling means configured to cool the profile elements (P) being joined in the area of the weld formed by joining the two end faces (W) whose material has been plasticized, wherein the cooling means comprise at least one cooling member (5) having at least one nozzle (5, 1) configured to direct a cooling flow towards the front or rear welding line (FR, RL). The invention relates also to a machine and a method for welding profile elements.

## Description

### Technical Field

The invention belongs generally to the field of joinery, and in particular to the technology of manufacturing window or door frames. More specifically, the invention relates to a welding assembly for joining plastic profile elements, especially window or door frames, a machine for welding profile elements and a method for welding profile elements.

### Background art

Window or door frames are manufactured by joining profile elements made of plastic, most often PVC. For this purpose, the ends of the profile elements, usually cut at a 45-degree angle, are heated to plasticize the material and the end faces are pressed together along the edges being joined. The plasticized materials of the profile elements mix with each other under pressure, and/or due to vibrations, and after cooling they are permanently joined.

There are many tools, devices and machines for manufacturing window and door frames known in the art.

Currently used machines even allow for simultaneous welding of all four profile elements in one step. This type of machine includes four stations equipped with welding devices which work in a coordinated manner under the control of a central control unit. Each welding device comprises, inter alia, a frame, a pair of support or holding elements configured to secure or hold plastic profile elements, a heating module with a heating plate for heating the end faces being joined, moving elements in the form of pneumatic actuators or servo-mechanisms for moving the profile elements for bringing the profile elements into a position in which the end faces being joined are in contact with each other, and for pressing them together. Additionally, known devices and machines can be equipped with various modules and supporting tools for mechanical and finishing machining, which, for example, form the weld, remove flash, reduce flash formation or cut seals.

Such devices and machines are disclosed in EP3481620A1, EP3132917A1, EP3117981A1.

PVC profile elements supplied to window and door manufacturers are most often covered with various types of foils, which have a protective and/or decorative function. Protective foils are designed to protect the profiles from mechanical damage and unfavourable weather conditions. Decorative foils, in turn, are designed to add aesthetic value to the profile in the form of a specific colour or design. Such foils are typically made of a polymeric plastic, such as PVC. The foil is applied to the outer surfaces of the profile elements in a hot lamination process using hot melt adhesives, such as polyurethane-based adhesives.

When welding profile elements along the welding line, i.e. the line defined by the contacting edges at the end face, a flash is created as a result of the plasticization of the material and pressing together the profile elements, which flash must be properly formed into a weld. After cooling, the excess plasticized material forms a visible bead, i.e. a thickening, that protrudes above the surface. This must be removed by machining, for example, using cutting or milling tools, to ensure an aesthetically pleasing weld.

Such tools for machining welds and corners of joined profile elements are disclosed, for example, in DE102004014545A1, EP0705659A1, EP1297923A1, EP3117981A1.

### Technical problem

When welding PVC profile elements using known tools and methods, a number of problems arise that can lead to an imperfect weld or an uneven weld surface, which leads to reduced strength of the joint and creates an unsightly finish.

One such problem arises from the use of protective and decorative foils. Specifically, the foils deform under the influence of temperature, causing bulges or wrinkles, which reduce the aesthetic value of the final product.

Furthermore, damage to the foil due to exposure to excessively high temperatures can result in discolouration or a glossy effect on its surface, which is undesirable because it further reduces the aesthetic value of window and door frames.

One way to remedy this problem is to manually or mechanically remove fragments of the foil from the joining surfaces before they are heated to plasticize the material. However, this method is inefficient because it significantly extends the welding cycle of the profile elements. Furthermore, it requires precise removal of the foil so that the removed section is neither too wide nor too narrow. Removing a section of foil that is too wide can expose a certain area of the profile element, which will be void of its protective or decorative function. Removing a section of foil that is too narrow can result, in turn, in the final product having at least some of the aforementioned defects.

Another way to remedy this problem is to weld the profile elements without removing the foil fragments and use machining to remove the aforementioned imperfections. For this purpose, known tools are used, as disclosed, for example, in DE102004014545A1, EP0705659A1, EP1297923A1, EP3117981A1. However, this method is not free from its drawbacks. Essentially, it still requires the use of additional tools to remove imperfections, which results in longer production times and higher costs. Secondly, it involves the removal of material in the weld area during processing, which creates the risk of removing the foil and loosing the profile element of its protective and decorative function in the weld area.

### Objective of the invention

The objective of the present invention is to at least partially eliminate the aforementioned drawbacks of the prior art.

Another objective of the invention is to provide a solution that will enable welding of profile elements without the need to remove the foil or use mechanical processing tools.

### Summary of the invention

The solution to the technical problem is to absorb a portion of the heat from the surface of the profile elements being joined using cooling members equipped with nozzles that lower the temperature of the plasticized material to a level that allows for avoiding deformation of the foil and at the same time allows for joining the plasticized materials to obtain a durable weld.

According to a first aspect of the invention, there is provided a welding assembly for joining plastic profile elements, especially window or door frames, wherein said profile elements comprise:
an end face formed by cutting one end of a profile element, preferably at a 45-degree angle, wherein said end face is determined by:
   an inner side edge on the inner perimeter of the window or door frame and an outer side edge on the outer perimeter of the window or door frame, said inner side edge and outer side edge extending substantially perpendicular to the main plane of the assembled window or door frame,
   a front edge and a rear edge extending substantially parallel to the main plane of the assembled window or door frame,
   wherein when the two profile elements are in contact with their end faces, the front edges define a front welding line, and the rear edges define a rear welding line;
a front wall and a rear wall, which extend substantially in the main plane of the assembled window or door frame;
an inner side wall on the inner perimeter of the assembled window or door frame and an outer side wall on the outer perimeter of the assembled window or door frame, said inner side wall and outer side wall extending substantially perpendicular to the main plane of the assembled window frame;
wherein said welding assembly comprises:
   a heating module configured to heat the end faces of the profile elements to plasticize the material in their area, said heating module being equipped with a heating plate and heating plate moving means configured to move the heating plate between a first position in which the heating plate is withdrawn from between the end faces and a second position in which the heating plate is inserted between the end faces;
   cooling means configured to cool the profile elements being joined in the area of a weld formed by joining the two end faces whose material has been plasticized;
   wherein the cooling means include an at least one cooling member having an at least one nozzle configured to direct a cooling flow towards the front or rear welding line.

In one embodiment, the cooling member has an elongated body with a plurality of nozzles arranged in a row and extending along the axis of said body, the nozzles being configured to direct a cooling flow along substantially the entire length of the front or rear welding line.

In one embodiment, the nozzles of the cooling member are configured to direct a cooling flow towards the front or rear welding line at an angle of 1 to 90 degrees, and preferably at a 45-degree angle.

In one embodiment, the welding assembly comprises a pair of pressure plates configured to move in a direction transverse to the main plane of the assembled window or door frame, wherein said pressure plates are configured to exert pressure on the front walls or rear walls of the profile members in the area of the end faces.

In one embodiment, the welding assembly comprises two pairs of pressure plates, one pair being configured to exert pressure on the front or rear walls from above and the other pair being configured to exert pressure on the front or rear walls from below.

In one embodiment, the pressure plate comprises a chamfered side that, in the working position, extends along the front or rear welding line, the chamfered side being inclined at an acute angle relative to the main plane of the assembled window or door frame.

Preferably, the chamfered side comprises a socket configured to receive the cooling member.

In one embodiment, the at least one cooling member is attached to the pressure plate.

In yet one embodiment, the at least one cooling member is attached to the chamfered side of the pressure plate.

In one embodiment, the welding assembly comprises two pairs of cooling members, the first pair being configured to direct a cooling flow towards the front welding line, and the second pair being configured to direct a cooling flow towards the rear welding line.

According to a second aspect of the invention, there is provided a machine for welding plastic profile elements, especially window or door frames, comprising:
a base frame;
a positioning and pressing system equipped with:
   holding members configured to secure and stabilize profile elements during welding,
   drive means connected to the holding members for moving the profile elements between a first position, in which the end faces of the profile elements being welded are in contact with each other, and a second position in which the end faces of the profile elements being welded are spaced apart, and configured for pressing together the end faces that have been heated;
a main control unit configured to control the machine and comprising at least a processor and a memory;
a welding assembly according to the invention.

According to a third aspect of the invention, there is provided a method of welding plastic profile elements, in particular window or door frames, using a welding assembly according to the first invention, in which method at least two profile elements are welded, said profile elements comprising:
an end face formed by cutting one end of a profile element, preferably at a 45-degree angle, wherein said end face is determined by:
   an inner side edge on the inner perimeter of the window or door frame and an outer side edge on the outer perimeter of the window or door frame, said inner side edge and outer side edge extending substantially perpendicular to the main plane of the assembled window or door frame,
   a front edge and a rear edge extending substantially parallel to the main plane of the assembled window or door frame,
   wherein when the two profile elements are in contact with their end faces, the front edges define a front welding line, and the rear edges define a rear welding line;
a front wall and a rear wall, which extend substantially in the main plane of the assembled window or door frame;
an inner side wall on the inner perimeter of the assembled window or door frame and an outer side wall on the outer perimeter of the assembled window or door frame, said inner side wall and outer side wall extending substantially perpendicular to the main plane of the assembled window frame;
wherein said method comprises the following steps;
   a) placing the profile elements in a positioning and pressing system,
   b) inserting a heating plate between the end faces of the profile elements being joined,
   c) pressing the profile elements against the heating plate,
   d) heating the end faces until the material plasticizes in order to join two profile elements,
   e) moving the profile elements apart and withdrawing the heating plate,
   f) bringing the heated end faces into contact using a predefined force,
   g) forming a weld using an at least one forming tool
   h) cooling the weld,
   h) releasing holding members of the positioning and pressing system, and removing the welded profile elements,
wherein in step d) step d.1) is performed in which a cooling flow is directed towards the front and/or rear welding line in such a way that the temperature of the plasticized material on the surface of the front walls and/or rear walls just at the front edge and/or rear edge is lower than the temperature inside the plasticized material.

In one embodiment, step d.1) is also performed during step c) and/or step e).

In one embodiment, cooling medium is air or gases such as argon, helium, nitrogen, oxygen, and mixtures thereof.

### Advantageous effects of the invention

The invention eliminates the need for removing protective or decorative foils during welding.

This invention prevents unwanted overheating of the foil, which can lead to undesired deformation of the foil and the development of discolouration and a glossy effect. As a result, the invention improves the aesthetic value of the product without negatively affecting the strength of the joint between profile elements in the weld area.

An additional benefit of using the invention is the ability to steadily accelerate the cooling process of the plasticized material in the weld area, which results in a shorter welding cycle time.

### Brief description of the drawings

The subject matter of the invention will be explained in more detail with reference to the attached drawing, wherein:
Fig. 1 - shows a profile element in an axonometric view,
Fig. 2 - shows a welding assembly according to the invention in an axonometric view,
Fig. 3 - shows a fragment of the welding assembly with a visible heating plate to which the profile elements are pressed with their end faces,
Fig. 4 - shows a fragment of the welding assembly after withdrawing the heating plate and pressing the end faces together to join the profile elements,
Fig. 5A - shows a cooling member in an axonometric view from the front,
Fig. Fig. 5B - shows the cooling member in an axonometric view from the rear,
Fig. 6 - shows a pressure plate of a positioning and pressing system in an axonometric view,
Fig. 7 - shows a machine for welding profile elements according to the invention in an axonometric view.

### Detailed description of preferred embodiment

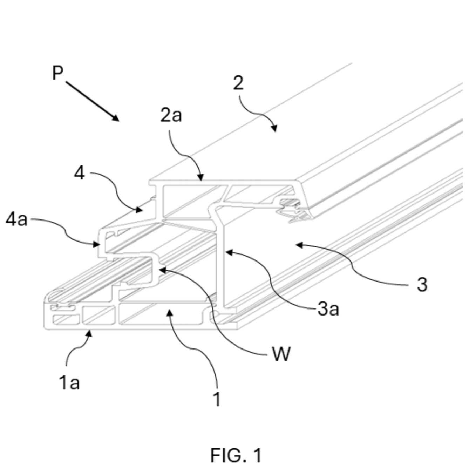

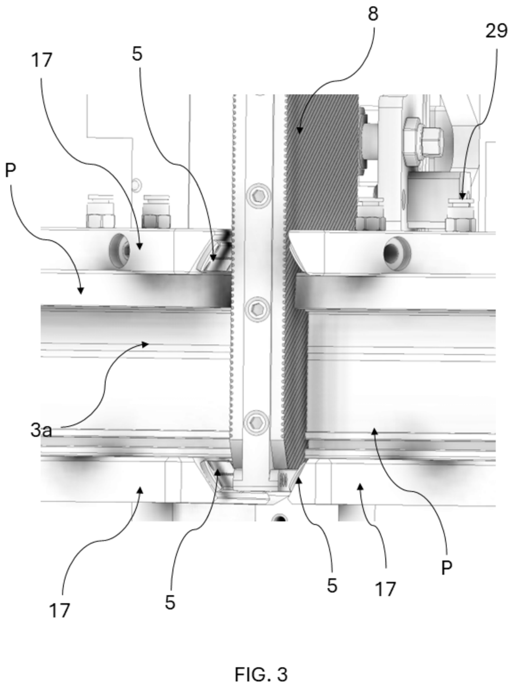

A welding assembly according to a first embodiment of the invention will be described with reference to Figs. 1-6.

A welding assembly is used to weld profile elements. Fig. 1 shows an example of a profile element P comprising:
an end face W formed by cutting one end of a profile element P, preferably at a 45-degree angle, wherein said end face W is determined by:
   an inner side edge 3a on the inner perimeter of the window or door frame and an outer side edge 4a on the outer perimeter of the window or door frame, said inner side edge 3a and outer side edge 4a extending substantially perpendicular to the main plane of the assembled window or door frame,
   a front edge 1a and a rear edge 2a extending substantially parallel to the main plane of the assembled window or door frame,
   wherein when the two profile elements P are in contact with their end faces W, the front edges 1a define a front welding line FL, and the rear edges 2a define a rear welding line RL;
a front wall 1 and a rear wall 2, which extend substantially in the main plane of the assembled window or door frame;
an inner side wall 3 on the inner perimeter of the assembled window or door frame and an outer side wall 4 on the outer perimeter of the assembled window or door frame, said inner side wall 3 and outer side wall 4 extending substantially perpendicular to the main plane of the assembled window or door frame;

The profile elements P are made of plastic, preferably PVC. They are used to assemble rectangular window or door frames, which are then part of window or door sashes, which in turn are typically hinged to architraves or door frames in wall openings.

The welding assembly may be a standalone device used in the process of welding profile elements P, or it may be part of a larger device or machine used to weld complete window and door frames.

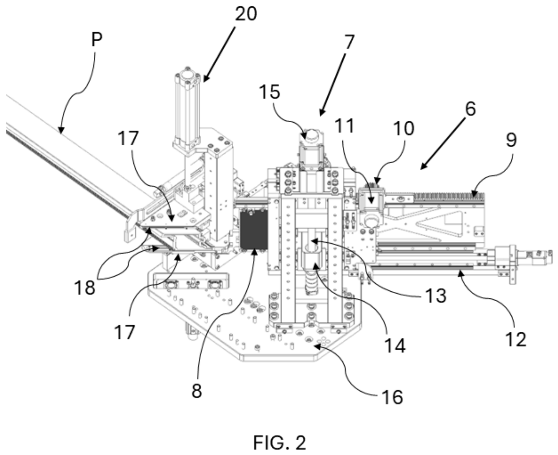

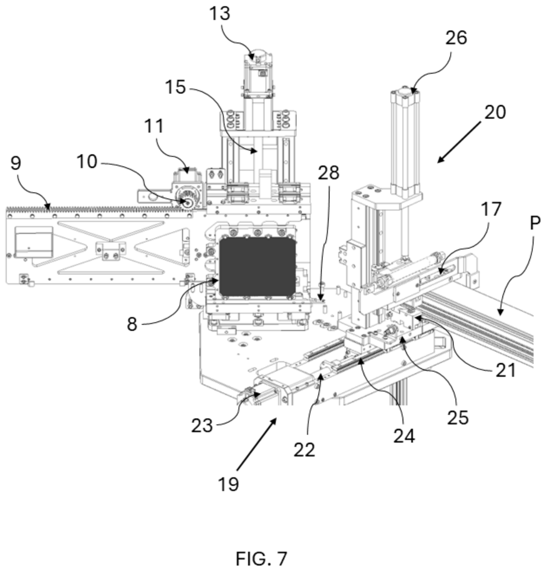

In a preferred embodiment illustrated in Fig. 2, a welding assembly is part of a machine for welding profile elements in the form of a station enabling welding of a single corner. Such a machine is described in more detail with reference to Fig. 7. The welding assembly generally comprises such elements as a heating module with a heating plate 8 configured to heat the end faces W of the profile elements P in order to plasticize the material in their area, and cooling means configured to cool the profile elements P being joined in the area of the weld formed by joining the two end faces W, the material of which has been plasticized.

Some or all of the above-mentioned components, as well as other additional equipment, are preferably mounted on a supporting structure, which may be, for example, a frame, a base, a column, or a housing. When the welding assembly is integrated with a machine for welding profile elements, the supporting structure may be directly or indirectly provided by the base frame of the machine. Preferably, in the latter case, the components of the welding assembly are mounted on a work table 16 which is mounted on the base frame (not shown).

The heating module includes a heating plate 8 and heating plate moving means 6, 7 for moving the heating plate 8 between a first position, in which the heating plate 8 is withdrawn from between the end faces W, and a second position, in which the heating plate 8 is inserted between the end faces 8 to press the end faces W against it.

The heating plate 8 comprises a first heating surface and a second heating surface parallel thereto. A heating element, e.g. a resistance wire, is placed between the first heating surface and the second heating surface.

The heating plate moving means 6, 7 may be a typical mechanisms providing linear motion, e.g. actuators or servo drives with electric motors, comprising systems of guides and carriages, or a screw with a nut. The moving means 6, 7 should enable movement of the heating plate 8 in at least one axis in order to insert and withdraw the heating plate 8 from between the end faces W of the profile elements P being joined.

In the presented embodiment, the heating plate moving means 6, 7 comprise a horizontal displacement unit 6 for movement in the X axis and a vertical displacement unit 7 for movement in the Y axis. The horizontal displacement unit 6 is a linear module comprising a pinion 9, a rack 10 coupled to the pinion 9, an electric motor 11 driving the rack 10, and a guide 12 along which the heating module with the heating plate 8 moves. The horizontal displacement unit 6 is in the form of a linear column comprising a lead screw 13 (e.g. a ball screw) with a nut 14 and an electric motor 15. Preferably, a forming punch 28 may be attached to the heating plate 8, and the moving means 6, 7 used to move the heating plate 8 are used to move it. The use of the existing drive system is preferred because it does not significantly increase the production costs. For this purpose, it is sufficient to simply attach the forming punch 28 (or other weld forming tool) to the heating plate 8.

The heating module may further comprise a vibration means, constituting a vibration generator module connected to the heating plate 8 and configured to cause the heating plate 8 to vibrate.

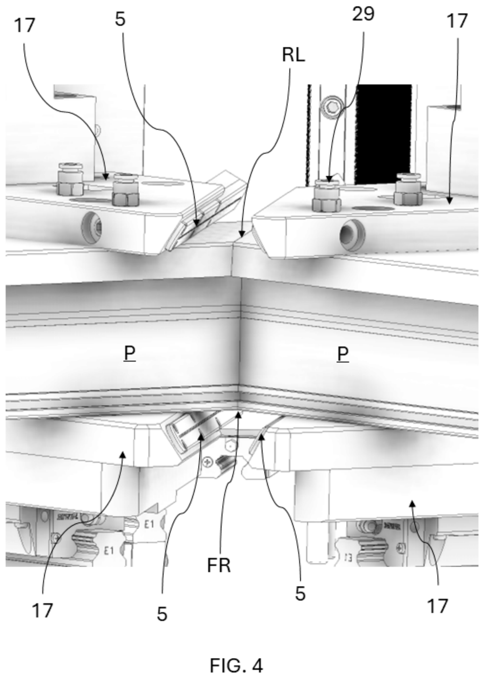

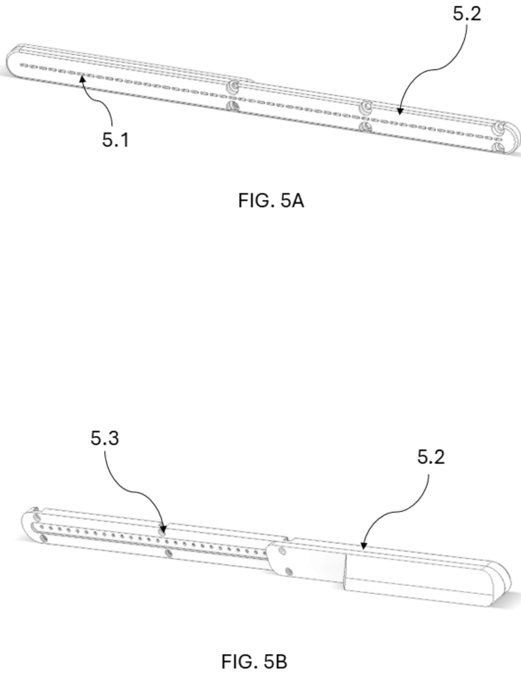

The cooling means include an at least one cooling member 5 having an at least one nozzle 5.1 configured to direct a cooling flow towards the front or rear welding line, FL, RL. The cooling member illustrated in Figs. 5A and 5B preferably has an elongated body 5.2 with a plurality of nozzles 5.1 arranged in a row and extending along the axis of the body 5.2. The length of the body 5.2 of the cooling member 5 and/or the arrangement and shape of the nozzles 5.1 are selected such that the cooling flows from the nozzles 5.1 are simultaneously directed along substantially the entire length of the front or rear welding line. In the illustrated embodiment, the welding assembly comprises two pairs of cooling members 5, wherein the first pair is configured to direct a cooling flow towards the front welding line FL, and the second pair is configured to direct a cooling flow towards the rear welding line RL (see Fig. 4).

The nozzles 5.1 of the cooling member 5 preferably direct the cooling flow at an angle of 1 to 90 degrees to the main plane of the window or door frame. The best results are achieved when the cooling flow is directed at an angle of approximately 45 degrees.

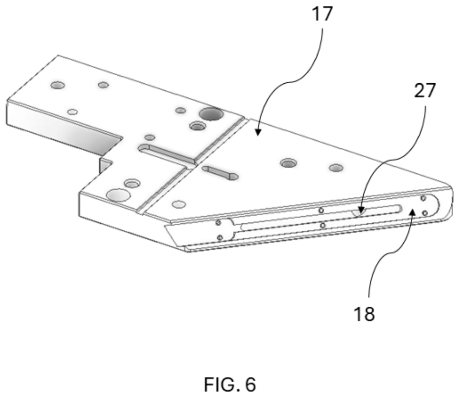

The cooling members 5 are preferably attached to pressure plates 17, which are moved in a direction transverse to the main plane of the window or door frame. The pressure plates 17 are part of a positioning and pressing system 19, 20, which will be described in more detail below with reference to Fig. 7. The function of the pressure plates 5 is to ensure stable pressure of the end faces W against each other and to align the positions of the front and rear walls 1, 2 so that they are flush. The welding assembly preferably comprises two pairs of pressure plates 17, one pair being configured to apply pressure to the front or rear walls 1, 2 from above, and the other pair being configured to apply pressure to the front or rear walls 1, 2 from below. The pressure plate 17 illustrated according to a preferred embodiment in Fig. 6 comprises a chamfered side which, in the working position, extends along the front FL or rear welding line RL and is inclined at an acute angle relative to the main plane of the window or door frame. The cooling members 5 are attached to this chamfered side. For this purpose, the chamfered side comprises a socket 18 for mounting the cooling member 5. The cooling member 5 comprises mounting holes 5.3 that receive mounting screws used to secure the cooling member 5 to the pressure plate 17. Preferably, the pressure plate 17 comprises one or more channels 27 and a supply port 29 through which the cooling medium is supplied to the nozzles 5.1.

In a preferred embodiment, the welding assembly comprises a cooling module comprising said cooling members 5, a control system with pneumatic solenoid valves for controlling the flow of the cooling medium and the cooling flow, and a reservoir for storing the compressed cooling medium, preferably compressed air. The control system may be configured so that the flow of the cooling streams in each cooling member 5 is performed simultaneously or alternately. Cooling may also be carried out in one or more successive cycles.

The welding assembly can also be equipped with a control unit that controls and manages its operations. When the welding assembly is implemented in a machine for welding profile elements, in particular such one that allows four corners to be welded simultaneously, the control unit can cooperate with the machine's main control unit, which acts then as a master controller. Alternatively, the machine's main control unit can completely replace the control unit of the welding assembly.

The control unit may be a computing device commonly known in the art, such as a computer, tablet, server, laptop, smartphone, microprocessor-based programmable logic controller (PLC), and others.

The control unit includes components such as a processor capable of processing data and executing instructions stored in the computer's memory; a memory containing application software run by the processor and containing instructions executed by the processor; and software stored in the memory for controlling the operation of the welding assembly.

The processor runs software, processes data, communicates with other devices, and executes instructions according to the operations stored in the computer memory.

The memory is preferably a non-volatile flash computer memory that stores the operating system, application software, and database. A program or application for controlling the welding assembly by the user may be stored in the computer memory. In some embodiments, the control unit may include only or additionally a volatile RAM memory.

Preferably, a file is stored in the computer memory which may contain instructions for the processor, e.g. welding process parameters, including parameters defining the cooling stream and its flow, such as flow rate, velocity, time or temperature.

With reference to Fig. 7, the following is a description of a machine for welding plastic profile elements according to the second embodiment of the invention. The detailed design and description of operation of the machine is neither illustrated nor described, as such machines are well known in the art.

A machine for welding profile elements generally comprises the following components:
a base frame (not shown);
a positioning and pressing system 19, 20 equipped with:
   holding members 21 configured to hold and stabilize the profile elements P during welding,
   drive means 22, 23 connected to the holding members 21 for moving the profile elements P between a first position, in which the end faces W of the profile elements P being welded are in contact with each other, and a second position in which the end faces W of the profile elements P being welded are spaced apart, and configured for pressing together the end faces W that have been heated;
a main control unit configured to control the welding device and comprising at least a processor and a memory;
an at least one forming tool 28 for forming a weld;
a welding assembly according to the first embodiment.

It will be obvious to those skilled in the art that the machine may be equipped with other mechanical, electrical, or electronic components not listed herein that are necessary for its proper operation.

Fig. 7 shows only one station, but the machine preferably comprises four stations, each station being equipped with a welding assembly. In this way, all four corners of a window or door frame can be welded simultaneously.

Preferably, the forming tool is a forming punch that forms the flash and/or reduces the flow of plasticized material in the weld area. The forming punch 28 may form the flash on the front walls, rear walls, outer side walls, or any combination thereof. For example, the forming punch 28 may include a forming face and a pressing element, wherein the pressing element includes a vibration generator module configured to cause the forming face to vibrate. Preferably, the welding assembly includes two oppositely operating forming punches 28 that are located in a plane perpendicular to the main plane of the window or door frame.

The positioning and pressing system 19, 20 includes holding members 21 that enable the profile elements P to be secured and moved horizontally to bring their end faces W into contact. The holding members 21 can be slidably attached to the worktop 16. The holding members 21 can be in the form of block supports, longitudinal profiles, or clamps. The holding members 21 can be preferably moved using a system of guides and carriages integrated with the worktop 16 and linear motors driving the carriages. Another embodiment of the linear movement of the holding members may involve the use of a lead screw and a nut.

The positioning and pressing system 19, 20 in the presented embodiment includes a positioning unit 19 and a pressing unit 20. The positioning unit 19 is configured to secure the profile elements P and move them horizontally to bring the end faces W into contact. The positioning unit 19 includes a holding member 21 mounted on a support plate 25, which moves along a guide 24. The drive is provided by a drive screw 22 with a nut and an electric motor23.The pressure unit 20 comprises a linear actuator 25 with a pressure plate 17, which cooperates with the holding member 21 to correctly position the end faces W relative to each other in the vertical plane. Preferably, the pressing unit 20 includes two linear actuators 26 and two pressure plates 17 that press the profile elements P from both the bottom and the top. The pressure plates 17 exert pressure on the profile elements P being joined, from below and from above, i.e. on the front walls 1 and rear walls 2, respectively. Thanks to this, the surfaces of the front walls 1 and rear walls 2 are aligned with each other and lie in one plane.

According to a third embodiment, a method for welding plastic profile elements, especially window or door frames, is provided, comprising the following steps performed by a machine according to the second embodiment using a welding assembly according to the first embodiment:
a) placing the profile elements in a positioning and pressing system 19, 20,
b) inserting a heating plate 8 between the end faces W of the profile elements P being joined,
c) pressing the profile elements P against the heating plate 8,
d) heating the end faces W until the material plasticizes in order to join two profile elements P,
e) moving the profile elements P apart and withdrawing the heating plate 8,
f) bringing the heated end faces W into contact using a predefined force,
g) forming the weld using at least one forming tool 28
h) cooling a weld,
i) releasing holding members 21 and removing the welded profile elements P,
wherein step d) is performed in step d.1), in which a cooling flow is directed towards the front FR and/or rear welding line RL so that the temperature of the plasticized material on the surface of the front walls 1 and/or rear walls 2, just at the front edge 1a and/or rear edge 2a, is lower than the temperature inside the plasticized material.

Preferably, step d.1) is also performed during step c) and/or step e). Cooling medium may be compressed air or gases such as argon, helium, nitrogen, oxygen, and mixtures thereof.

Cooling cycles are individually selected depending on the shape of the profile elements P and can be individually programmed using a control unit, preferably in the form of a programmable logic controller (PLC).

Preferably, the temperature of the heating plate 8 in step c) is 250 degrees Celsius. The temperature of the heating plate 8 generally depends on the shape of the profile element P and its wall thickness and may, for example, be in the range of 150-300 degrees Celsius.

Preferably, to achieve the desired effect in step d.1), the cooling members 5 are activated in cycles consisting of blowing the cooling medium for 3 seconds and 1 second break during the entire heating process, which lasts for 25 seconds. The pressure of the cooling medium, e.g. compressed air, is preferably between 2 and 5 bar, more preferably 4 bar. The temperature of the outer surfaces of the front wall 1 and rear wall 2, i.e. the temperature of the outermost layer of the material in the area where the profile elements P are joined at the end face W, was reduced to approximately 140 degrees Celsius when the heating plate 8 was heated to 250 degrees Celsius. In other preferred embodiments, the outer surfaces of the front walls 1 and rear walls in the area of the end faces W can be cooled to a temperature in the range of 100-200 degrees Celsius while maintaining temperature of approximately 250 degrees Celsius within the material.

Preferably, the heating plate 8 is equipped with a temperature sensor and a PID temperature controller that responds to changes in the temperature of the heating plate 8 as a result of the operation of cooling elements 5 and regulates it to a preset temperature.

As a result of the action of the cooling medium, the fastest heat transfer occurs on the outer surface of the profile element P. The outer surface layer cools significantly faster than the deeper layers. While the material inside remains plasticized (liquid), the outer surface partially solidifies and becomes similar to a solid state. It can be compared to a shell that is still soft but yet can be shaped. This prevents the adverse effects of high temperatures on the protective or decorative foils covering the profile element P, in particular preventing foil deformation, discolouration, and gloss. As a result, the welding process is also faster because there is no need to remove the foil.

## Claims

1. A welding assembly for joining plastic profile elements, especially window or door frames, wherein said profile elements (P) comprise:
an end face (W) formed by cutting one end of a profile element (P), preferably at a 45-degree angle, wherein said end face (W) is determined by:
an inner side edge (3a) on the inner perimeter of the window or door frame and an outer side edge (4a) on the outer perimeter of the window or door frame, said inner side edge (3a) and outer side edge (4a) extending substantially perpendicular to the main plane of the assembled window or door frame,
a front edge (1a) and a rear edge (2a) extending substantially parallel to the main plane of the assembled window or door frame,
wherein when the two profile elements (P) are in contact with their end faces (W), the front edges (1a) define a front welding line (FL) and the rear edges define a rear welding line (RL);
a front wall (1) and a rear wall (2), which extend substantially in the main plane of the assembled window or door frame;
an inner side wall (3) on the inner perimeter of the assembled window or door frame and an outer side wall (4) on the outer perimeter of the assembled window or door frame, said inner side wall (3) and outer side wall (4) extending substantially perpendicular to the main plane of the assembled window or door frame;
wherein said welding assembly comprises:
a heating module configured to heat the end faces (W) of the profile elements (P) to plasticize the material in their area, said heating module being equipped with a heating plate (8) and heating plate moving means (6, 7) configured to move the heating plate (8) between a first position in which the heating plate (8) is withdrawn from between the end faces (W) and a second position in which the heating plate (8) is inserted between the end faces (W);
cooling means configured to cool the profile elements (P) being joined in the area of a weld formed by joining the two end faces (W) whose material has been plasticized;
**characterized in that**
the cooling means comprise an at least one cooling member (5) having an at least one nozzle (5, 1) configured to direct a cooling flow towards the front or rear welding line (FR, RL).

2. The welding assembly according to claim 1, **wherein** the cooling member (5) has an elongated body (5.2) with a plurality of nozzles (5.1) arranged in a row and extending along the axis of said body (5.2), the nozzles (5.1) being configured to direct a cooling flow along substantially the entire length of the front or rear welding line (FR, RL).

3. The welding assembly according to any of the preceding claims 1-2, **wherein** the nozzles (5.1) of the cooling member (5) are configured to direct a cooling flow towards the front or rear welding line (FR, RL) at an angle of 1 to 90 degrees, and preferably at a 45-degree angle.

4. The welding assembly according to any one of the preceding claims 1-3, **wherein** comprises a pair of pressure plates (17) configured to move in a direction transverse to the main plane of the assembled window or door frame, wherein said pressure plates (17) are configured to exert pressure on the front walls (1) or rear walls (2) of the profile members (P) in the area of the end faces (W).

5. The welding assembly according to claim 4, **wherein** it comprises two pairs of pressure plates (17), one pair being configured to exert pressure on the front or rear walls (1, 2) from above and the other pair being configured to exert pressure on the front or rear walls (1, 2) from below.

6. The welding assembly according to either claim 4 or 5, **wherein** the pressure plate (17) comprises a chamfered side that, in the working position, extends along the front or rear welding line (FR, RL), the chamfered side being inclined at an acute angle relative to the main plane of the assembled window or door frame.

7. The welding assembly according to claim 6, **wherein** the chamfered side comprises a socket (18) configured to receive the cooling member (5).

8. The welding assembly according to either claim 4, 5, or 6, **wherein** the at least one cooling member (5) is attached to the pressure plate (17).

9. The welding assembly according to either claim 4, or 5, or 6, or 7, **wherein** the at least one cooling member (5) is attached to the chamfered side of the pressure plate (17) in the socket (18).

10. The welding assembly according to any of the preceding claims 1-9, **wherein** it comprises two pairs of cooling members (5), the first pair being configured to direct a cooling flow towards the front welding line (FL) and the second pair being configured to direct a cooling flow towards the rear welding line (RL).

11. A machine for welding plastic profile elements, especially window or door frames, comprising:
a base frame;
a positioning and pressing system (19, 20) equipped with:
holding members (21) configured to secure and stabilize the profile elements (P) during welding,
drive means (22, 23) connected to the holding members (21) for moving the profile elements (P) between a first position, in which the end faces (W) of the profile elements (P) being welded are in contact with each other, and a second position in which the end faces (W) of the profile elements (P) being welded are spaced apart, and configured for pressing together the end faces (W) that have been heated;
a main control unit configured to control the machine and comprising at least a processor and a memory;
a welding assembly as defined in any of claims 1-10.

12. A method of welding plastic profile elements, especially window or door frames, using a welding assembly defined according to any of claims 1-10, in which method at least two profile elements (P) are welded, said profile elements (P) comprising:
an end face (W) formed by cutting one end of a profile element (P), preferably at a 45-degree angle, wherein said end face (W) is determined by:
an inner side edge (3a) on the inner perimeter of the window or door frame and an outer side edge (4a) on the outer perimeter of the window or door frame, said inner side edge (3a) and outer side edge (4a) extending substantially perpendicular to the main plane of the assembled window or door frame,
a front edge (1a) and a rear edge (2a) extending substantially parallel to the main plane of the assembled window or door frame,
wherein when the two profile elements (P) are in contact with their end faces (W), the front edges (1a) define a front welding line (FL) and the rear edges (2a) define a rear welding line (RL);
a front wall (1) and a rear wall (2), which extend substantially in the main plane of the assembled window or door frame;
an inner side wall (3) on the inner perimeter of the assembled window or door frame and an outer side wall (4) on the outer perimeter of the assembled window or door frame, said inner side wall (3) and outer side wall (4) extending substantially perpendicular to the main plane of the assembled window or door frame;
wherein said method comprises the following steps;
a) placing the profile elements (P) in a positioning and pressing system (19, 20),
b) inserting a heating plate (8) between the end faces (W) of the profile elements (P) to be joined,
c) pressing the profile elements (P) against the heating plate (8),
d) heating the end faces (W) until the material plasticizes in order to join two profile elements (P),
e) moving the profile elements (P) apart and withdrawing the heating plate (8),
f) bringing the heated end faces (W) into contact using a predefined force,
g) forming a weld using an at least one forming tool (28),
h) cooling the weld,
i) releasing holding members (21) of the positioning and pressing system (19, 20) and removing the welded profile elements (P),
**characterized in that** in step d) step d.1) is performed in which a cooling flow is directed towards the front and/or rear welding line (FR, RL) in such a way that the temperature of the plasticized material on the surface of the front walls and/or rear walls (1, 2) just at the front edge and/or rear edge (1a, 2a) is lower than the temperature inside the plasticized material.

13. The method according to claim 12, **wherein** step d.1) is also performed during step c) and/or step e).

14. The method according to either claim 12 or 13, **wherein** cooling medium is air or gases such as argon, helium, nitrogen, oxygen, and mixtures thereof.
